Europäisches Patentamt

(19) European Patent Office

Office européen des brevets

(11) Numéro de publication: **0 047 545**
A2

(12) # DEMANDE DE BREVET EUROPEEN

(21) Numéro de dépôt: **81200897.7**

(22) Date de dépôt: **11.08.81**

(51) Int. Cl.³: **B 23 K 11/36**

(30) Priorité: **05.09.80 IT 6837280**

(71) Demandeur: **Caprioglio, Luigi, Dr.Ing., 224 corso Francia, I-10146 Torino (IT)**

(43) Date de publication de la demande: **17.03.82**
**Bulletin 82/11**

(72) Inventeur: **Caprioglio, Luigi, Dr.Ing., 224 corso Francia, I-10146 Torino (IT)**

(84) Etats contractants désignés: **CH DE FR GB LI SE**

(74) Mandataire: **Patrito, Pier Franco, Dr. Ing., Via Don Minzoni 14, I-10121 Torino (IT)**

(54) **Support pour pince, pour robot de soudure électrique.**

(57) Un support pour la pince de soudure, pour un robot destiné à exécuter des opérations de soudure électrique, qui comprend un dispositif (2, 7-9) de déplacement alternatif de la pince (P) apte à permettre de compenser le déplacement du poignet (O) du robot, en réalisant des conditions temporaires d'état stationnaire de la pince (P) grâce auxquelles on peut exécuter des soudures sans arrêter le mouvement des bras du robot. On limite ainsi l'application d'accélérations élevées, nécessaires pour une opération rapide, à la pince de soudure (P) et à quelques parties annexes (2, 8-11), d'une masse globale réduite par rapport à celle des bras mobiles du robot. On peut atteindre des vitesses opératives élevées avec des sollecitations limitées sur la machine, qui peut être projetée de forme relativement lourde, et on améliore la précision de positionnement de la pince sur les points prévus pour la soudure.

- 1 -

SUPPORT POUR PINCE,
POUR ROBOT DE SOUDURE ELECTRIQUE

La présente invention a pour objet un support pour pince, pour des robots destinés à effectuer des opérations de soudure électrique.

Les robots sont toujours plus employés pour des opérations qui demandent un nombre élevé de soudures électriques par points, particulièrement en considération du nombre élevé des points de soudure que de telles machines sont capable d'exécuter dans l'unité de temps. Pour cette raison on cherche de porter au maximum le nombre de soudures qui peuvent être exécutées dans un temps donné et, puisque le temps d'exécution de chaque soudure est un paramètre substantiellement non modifiable, on cherche de réduire au minimum le temps de déplacement de la pince de soudure de chaque point au successif. Mais cela comporte de graves difficultés en considération de la grande masse des parties mobiles du robot, qui doivent être déplacées en même temps que la pince, avec des fortes accélérations puisque, pour chaque déplacement d'un point de soudure au successif, ces parties doivent être accélérées de la position arrêtée à une vitesse maximum et puis décélérées jusqu'à l'arrêt complet dans la nouvelle position. Ces fortes accélérations appliquées à des grandes masses imposent des limites aux réductions de temps qu'on peut atteindre, elles causent des fortes sollicitations mécaniques avec une conséquente usure précoce de la machine, et à l'arrêt de la pince elles causent souvent des oscillations résiduelles, dont on doit attendre l'amortissement avant de procéder à la soudure, en perdant ainsi une partie du temps de déplacement épargné. En outre ces lourdes conditions de travail influencent le projet des machines, en imposant de renoncer partiellement à la robustesse en faveur de la légèreté pour réduire les forces d'inertie, causant ainsi des prix plus hauts et des compromis peu favorables.

Le but de la présente invention est celui de réaliser un support pour pince de soudure qui permette de soustraire aux accélérations élevées, nécessaires pour effectuer des déplacements rapides, les grandes masses de la machine, en laissant exposées à ces accélérations seulement la pince de soudure et quelques parties annexes ayant une masse réduite, de manière à consentir, d'une part, d'atteindre des temps de déplacement très réduits et, d'autre part, de soustraire celui qui projette la machine à des exigences de légèreté qui sont très nuisibles à la robustesse et à la durée du robot.

Le support pour pince, pour un robot destiné à exécuter des opérations de soudure électrique et comprenant au moins un bras mobile avec un élément d'extrémité portant une pince pour soudure, selon l'invention, est caractérisé par le fait qu'il comprend une pièce de base destinée à être reliée à l'élément d'extrémité du robot, une pièce porte-pince destinée à recevoir la connexion de là pince pour soudure, et, entre ces deux pièces, des moyens de déplacement alternatif, susceptibles d'être actionnés et contrôlés en fonction des déplacements de l'élément d'extrémité du robot, de manière à consentir la réalisation temporaire de conditions stationnaires de la pince supportée, en présence de mouvements de l' élément d'extrémité du robot.

Grâce à ces caractéristiques, un robot muni de support pour pince de soudure selon l'invention peut être programmé pour suivre avec un mouvement non interrompu une trajectoire lelong de laquelle se trouvent les points de soudure prévus, et les moyens de déplacement alternatif du support pour pince peuvent être programmés à leur fois de manière à réaliser temporairement des conditions stationnaires de la pince en correspondance des points de soudure prévus, de sorte que les opérations de soudure peuvent être exécutées correctement pendant les périodes de stationnement de la pince, sans exiger l'arrêt des bras du robot. De cette façon, les fortes accélérations, nécessaires pour passer rapidement de chaque position d'arrêt pour l'exécution d'une soudure à la successive, doivent être appliquées seulement à la pince pour soudure, à la pièce porte-pince du support et aux moyens de déplacement alternatif, c'est-à-dire à une masse totale de l'ordre d'une dizaine de kilogrammes, en évitant ces accélérations à la masse de centaines de kilogrammes des parties mobiles du robot, qui se limitent à suivre una trajectoire ininterrompue, avec des accélérations et sollicitations limitées. L'application de l'invention permet en conséquence de réaliser une réduction ultérieure des temps de déplacement de la pince d'un point de soudure à l'autre, une plus grande précision de positionnement, une réduction de l'énergie d'actionnement, une moindre sollicitation de la machine dans son ensemble et, par conséquent, la possibilité de projeter la machine plus rationnellement, avec l'emploi de composants de robustesse et poids appropriés et par conséquent de plus grande durée.

Lesdits moyens de déplacement alternatif comprennent préférablement des guides, installés sur ladite pièce de base et sur lesquels est montée glissante ladite pièce porte-pince, un moteur installé sur ladite pièce de base et relié opérativement à ladite pièce porte-pince pour produire ses déplacements alternatifs, et un moyen de mesure des déplacements de ladite pièce porte-pince à la pièce de base.

Le moteur et les moyens de mesure des déplacements peuvent ainsi être insérés dans le circuit d'un servo--mécanisme prévu pour réaliser avec précision la condition de stationnement de la pince en correspondance des points de soudure prévus, compte tenu de la vitesse de déplacement de l'élément d'extrémité du robot auquel est appliqué le support pour pince.

Ledit moteur peut être un moteur électrique solidaire d'une dynamo tachymétrique, lesdits guides peuvent être linéaires, et une vis de commande peut être reliée opérativement audit moteur et se visser dans une vis femelle reliée à la pièce porte-pince.

Le moyen de mesure des déplacements peut être un dispositif électromagnétique du type dit résolver, installé sur la pièce de base et muni d'une roue dentée couplée à une crémaillère appliquée à la pièce porte-pince.

Comme on peut le comprendre, il est très facile de programmer les moyens de déplacement alternatif de la pince de manière à compenser exactement la vitesse de déplacement de l'élément d'extrémité du robot là où la trajectoire suivie par ce dernier est simple, tandis que des difficultés considérables peuvent être rencontrées en des points singuliers de la trajectoire. En ces points on peut alors accepter un ralentissement temporaire de l'opération, laquelle peut éventuellement être effectuée sans faire recours aux déplacements alternatifs de la pièce porte-pince par rapport à la pièce de base; ou bien on peut recourir à une compensation simplement approximative de la vitesse de déplacement de l'élément d'extrémité du robot, en introduisant dans quelque point du support pour pince, entre l'élément d'extrémité du robot et la pince pour soudure, un moyen de connexion apte à consentir un déplacement élastique limité, capable de perfectionner l'approximation obtenue dans ladite compensation approximative, en profitant du fait que la pince, serrée sur la pièce en cours de soudure, est retenue dans certaines limites par cette dernière.

L'invention sera ultérieurement expliquée dans la suite, avec référence à une forme de réalisation constituant un exemple non limitatif, représentée schématiquement dans les dessins annexés, dans lesquels:

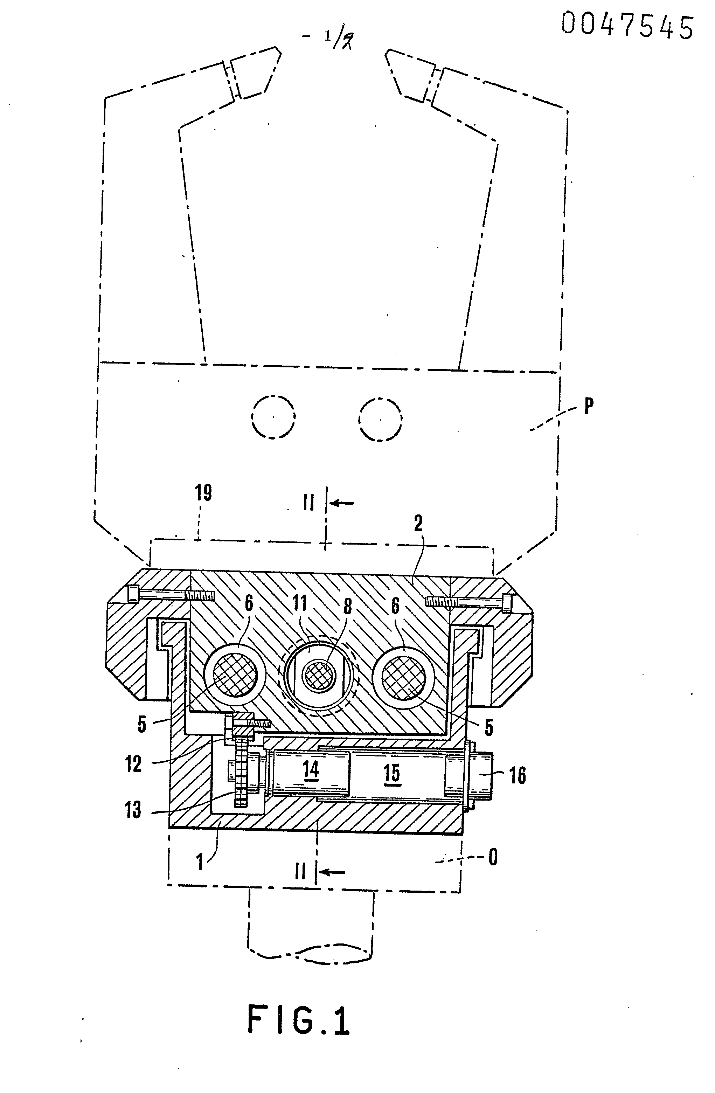

la figure 1 montre le support pour pince à souder selon l'invention, en une section transversale faite substantiellement selon la ligne I-I de la suivante figure 2, le support étant appliqué à l'élément d'extrémité d'un robot et portant une pince pour soudure;

la figure 2 montre le support selon la figure 1, en section longitudinale faite substantiellement selon la ligne II-II de la figure 1;

la figure 3 montre, en trois illustrations schématiques A, B et C, le principe de fonctionnement du support pour pince selon l'invention.

Par O est indiqué l'élément d'extrémité, ou poignet, d'un robot pour soudure, qui peut être de quelconque genre et particulièrement soit du type orthogonal, soit du type polaire. Par P est indiqué une pince pour soudure qui peut être, elle aussi, d'un type quelconque et qui, selon la technique connue, serait appliquée directement au poignet O du robot de soudure.

Selon l'invention, entre ces parties connues est interposé un support pour pince particulier, avec des moyens de déplacement alternatif, qui comprend una pièce de base 1, destinée à être appliquée au poignet O du robot, et une pièce porte-pince 2, destinée à recevoir l'application de la pince P. A' la pièce de base 1 sont fixés des éléments d'extrémité 3 et 4 entre lesquels s'étendent deux guides linéaires 5, sur lesquels, au moyen de roulements axiaux à billes 6, est montée glissante la pièce porte-pince 2 qui, ainsi, peut se déplacer avec la pince P, sur une distance limitée, dans la direction definie par les guides 5, par rapport au poignet O du robot. La direction des guides 5 est établie de sorte à coïncider avec la tangente à la trajectoire de déplacement suivie par le poignet O du robot.

Dans un roulement 7, porté par l'élément d'extrémité 3, est montée une vis de commande 8 parallèle aux guides 5 et interposée entre eux, dont l'extrémité opposée est reliée à un moteur 9 qui peut être un moteur électrique à courant continu à disque, monté par brides sur l'élément d'extrémité 4 opposé à l'élément 3 sur la pièce de base 1. Au moteur 9 est en outre couplée une dynamo tachymétrique 10 qui sert, de manière connue, pour une correcte insertion du moteur 9 dans un anneau de réglage connu.

La pièce porte-pince 2 est munie d'une vis femelle 11 vissée sur la vis de commande 8 de sorte que, comme on peut le comprendre, la rotation dans un sens et dans l'autre du moteur 9 est capable de produire un déplacement alternatif de la pièce porte-pince 2 lelong des guides 5 de la pièce de base 1.

Dans sa partie dirigée vers la pièce de base 1, la pièce porte-pince 2 porte une crémaillère 12 avec laquelle est engrenée une roue dentée 13, double pour la reprise des jeux, montée sur l'arbre d'un résolver électromagnétique 14 installé dans une cavité 15 de la pièce de base 1, cavité fermée par un bouchon 16 qui sert de connecteur pour le résolver 14. Celui-ci peut être donc inclus dans un anneau de réglage pour un contrôle complet, effectué de manière connue, des déplacements imposés par le moteur 9 à la pièce porte-pince 2.

Des soufflets 17 et 18, ou d'autres organes de protection equivalents, s'étendent entre la pièce porte-pince 2 et les éléments d'extrémité 3 et 4 respectivement de la pièce de base 1, pour protéger et couvrir les guides 5, la vis de commande 8 et les parties annexes.

On a tout d'abord dit que, pendant que la trajectoire de soudure est parcourue, les guides 5, qui déterminent la direction de déplacement relatif entre la pièce porte-pince 2 et la pièce de base 1, sont disposés parallèles à la tangente à la trajectoire suivie par le poignet O du robot. Cela ne comporte pas de limitations à la trajectoire qu'on peut exécuter, parce que, de façon connue, le poignet du robot est en soi orientable en toute direction dans les limites opérativement utiles, étant porté, orthogonalement ou polairement, par un système à six axes de déplacement. Dans ces conditions, comme on peut le comprendre, la vitesse de déplacement absolue V3 de la pince P est déterminée par la composition vectorielle de la vitesse de déplacement absolue V1 du poignet O du robot et de la vitesse relative de déplacement V2 de la pièce porte-pince 2 par rapport à la pièce de base 1. En se référant au cas simple d'un déplacement rectiligne, la vitesse V3 est simplement la somme algébrique de V1 et V2.

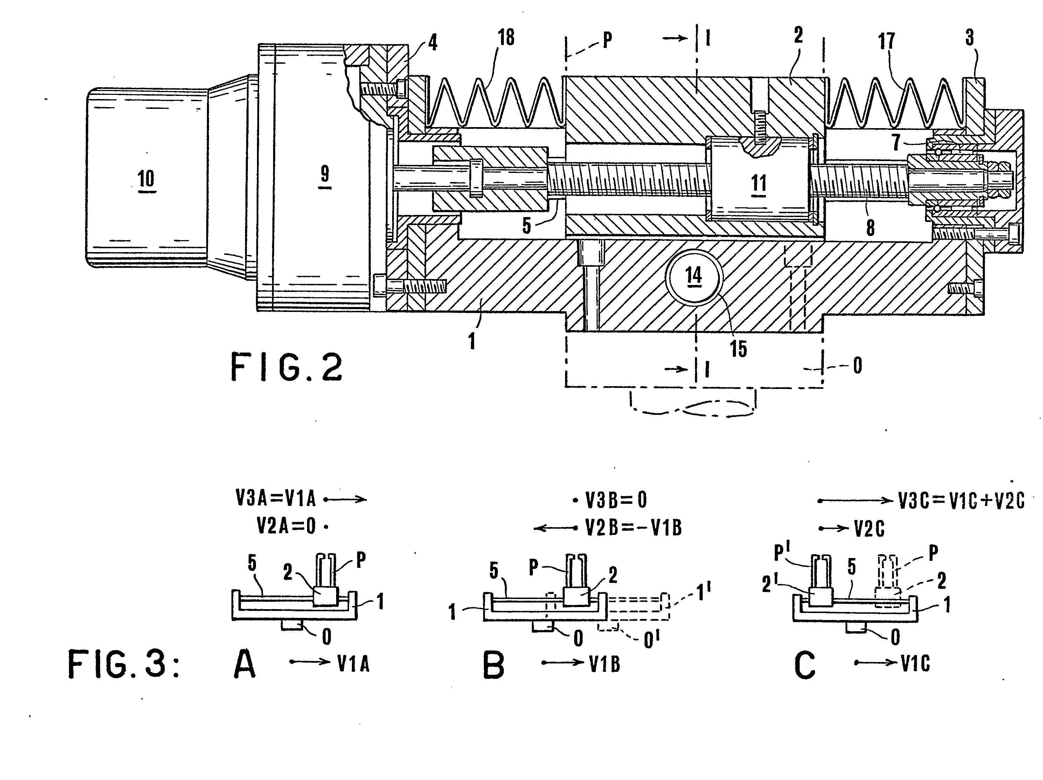

Donc, comme le montre le schéma de la figure 3A, quand la vitesse relative V2A entre les parties 2 et 1 est nulle, la vitesse absolue V3A de la pince P est égale à la vitesse absolue V1A du poignet O du robot; à savoir, quand le moteur 9 est arrêté, tout se passe comme si la pince P était appliquée directement au poignet O du robot.

Avec référence, au contraire, au schéma de la figure 3B, on remarque que, si au moyen du moteur 9 on réalise entre les pièces 2 et 1 une vitesse relative V2B, égale et contraire à la vitesse absolue V1B du poignet O du robot, la vitesse V3B de la pince P devient nulle. On a donc une période de stationnement de la pince P, quoique le poignet O du robot continue a suivre sans interruptions sa trajectoire. On profite de cette période de stationnement pour l'exécution d'une soudure.

Naturellement, la période de stationnement de la pince dans les conditions du schéma de la figure 3B est limitée au temps nécessaire pour que la pièce porte-pince 2 se déplace d'une extrémité à l'autre par rapport à la pièce de base 1, dans le mouvement relatif, ou, dans le mouvement absolu, pour que la pièce de base 1 et le poignet O du robot se portent, à partir des positions initiales, indiquées par ligne continue, jusqu'aux positions finales 1', 0' indiquées par pointillés.

Le schéma de la figure 3C montre comment, en imposant au moyen du moteur 9 à la pièce porte-pince 2 une vitesse V2C concorde avec la vitesse V1C du poignet du robot, la vitesse absolue V3C de la pince résulte augmentée par rapport à la vitesse du poignet pendant que la pièce porte-pince et la pince se déplacent, par rapport à la pièce de base 1, de la position arrière 2', P', où elles se trouvaient après la fase d'opération effectuée selon la figure 3B, indiquée par ligne continue, vers la position avant 2, P. Donc, pendant le déplacement du poignet 0 du robot d'une position de soudure à la suivante, la pince récupère sa position avancée par rapport au poignet, qui lui permettra d'exécuter une nouvelle soudure en condition de stationnement dans le point de soudure suivant.

Le support pour pince selon l'invention fournit donc un robot pour soudure d'un septième axe de déplacement à caractère alternatif, qui consent d'atteindre le but indiqué d'exécuter les soudures sans arrêter le mouvement des bras du robot et donc sans soumettre la structure à des accélérations importantes.

Quoique, pour éclairer le fonctionnement du dispositif selon l'invention, on a fait référence au cas simple d'une trajectoire de soudure rectiligne, il est évident que la condition de stationnement de la pince peut être obtenue même avec des trajectoires courbes, en calculant opportunément les paramètres selon lesquels doivent être programmés les déplacements. Toutefois, en cas de zones de trajectoire avec courbure très forte ou irrégulière, ce calcul peut devenir difficile et il peut être avantageux, pour ces zones qui sont toujours très limitées, de ne pas faire intervenir le dispositif selon l'invention, et d'arrêter le robot aux points de soudure en acceptant dans ces zones limitées une vitesse d'opération inférieure. Alternativement, on peut opérer une correction approximative et prévoir un moyen de connexion apte à permettre un déplacement élastique limité de la pince par rapport au poignet du robot; l'arrêt total de la pince pendant la soudure est alors assuré par le serrage de la pince sur la pièce à souder. Un tel moyen de connexion qui cède élastiquement d'une manière limitée peut être placé, par exemple, entre le poignet 0 du robot et la partie de base 1, ou entre cette dernière et les éléments d'extrémité 3 et 4, ou encore et préférablement, en 19, entre la pièce porte-pince 2 et la pince P.

Bien entendu, différentes modifications et toute substitution d'équivalents techniques peuvent être effectuées dans ce qui a été décrit et illustré, sans pour cela sortir du domaine de l'invention.

- 1 -

R E V E N D I C A T I O N S

1 - Support pour pince, pour un robot destiné à exécuter des opérations de soudure électrique et comprenant au moins un bras mobile avec un élément d'extrémité
(0) portant une pince pour soudure (P), caractérisé par
le fait qu'il comprend une pièce de base (1) destinée
à être reliée à l'élément d'extrémité (0) du robot, une
pièce porte-pince (2) destinée à recevoir la connexion
de la pince (P) pour soudure, et, entre ces deux pièces,
des moyens de déplacement alternatif (5, 6-9, 11), susceptibles d'être actionnés et contrôlés en fonction des
déplacements de l'élément d'extrémité (0) du robot, de
manière à consentir la réalisation temporaire de conditions stationnaires de la pince (P) supportée, en présence de mouvements de l'élément d'extrémité (0) du robot.

2 - Support pour pince selon la revendication 1,
caractérisé par le fait que lesdits moyens de déplacement
alternatif comprennent des guides (5), installés sur
ladite pièce de base (1) et sur lesquels est montée
glissante ladite pièce porte-pince (2), un moteur (9)
installé sur ladite pièce de base (1) et relié opérativement à ladite pièce porte-pince (2) pour produire ses déplacements alternatifs, et un moyen (12-14) de mesure des déplacements de ladite pièce porte-pince (2) par rapport à la pièce de base (1).

3 - Support pour pince selon la revendication 2, caractérisé par le fait que ledit moteur (9) est un moteur électrique et qu'il est solidaire d'une dynamo tachymétrique (10).

4 - Support pour pince selon la revendication 2 et éventuellement 3, caractérisé par le fait que lesdits guides (5) sont linéaires et qu'une vis de commande (8) est reliée opérativement audit moteur (9) et se visse dans une vis femelle (11) reliée à ladite pièce porte--pince (2).

5 - Support pour pince selon la revendication 2, caractérisé par le fait que ledit moyen de mesure des déplacements est un dispositif électromagnetique (10) du type dit résolver.

6 - Support pour pince selon la revendication 2 et éventuellement 5, caractérisé par le fait que ladite pièce porte-pince (2) est munie d'une crémaillère (12) avec laquelle engrène une roue dentée (13) reliée audit moyen de mesure (14) des déplacements, installé sur la pièce de base (1).

7 - Support pour pince selon la revendication 1, caractérisé par le fait qu'il comprend en outre des moyens de connexion (19) aptes à consentir un déplacement élastique limité de la pince (P) supportée par rapport à l'élément d'extrémité (0) du robot.

8 - Support pour pince selon la revendication 7, caractérisé par le fait que lesdits moyens de connexion (19) qui cèdent élastiquement d'une manière limitée sont interposés entre le pièce porte-pince (2) et la pince (P).

0047545

FIG.1

0047545

**FIG.2**

17  7  8  3  2  11  15  14  5  1  18  4  9  10  0  P  I  I

**FIG.3:**

A

$V3A = V1A$
$V2A = 0.$

→ V1A

5  2  P  1  0

B

$V3B = 0$
$V2B = -V1B$

→ V1B

5  1  2  P  0  1'  0'

C

$V3C = V1C + V2C$
V2C

→ V1C

P'  2'  5  P  2  1  0